# EUROPEAN PATENT SPECIFICATION

(11) **EP 1 309 182 B1**
(45) Date of publication and mention of the grant of the patent: **05.12.2007**
(21) Application number: 02016390.3
(22) Date of filing: 26.07.2002
(51) Int. Cl.: H04N 5/00, H04N 7/16, H04N 5/765

(54) **A method of providing a code upgrade to a host device having a smart card interface**
Verfahren zur Bereitstellung eines Software-Upgrades an ein Endgerät mit Chipkarten-Schnittstelle
Méthode pour fournir une mise-à-jour de logiciel à un terminal équipé d'une interface pour carte à puce

(30) Priority: 26.10.2001 US 47553
(43) Date of publication of application: 07.05.2003
(73) Proprietor: MATSUSHITA ELECTRIC INDUSTRIAL CO., LTD, Kadoma-shi, Osaka 571-8501 (JP)
(72) Inventor: Lownes, George, Morton, Pennsylvania 19070 (US)
(74) Representative: Schwabe - Sandmair - Marx

(56) References cited:
- EP-A- 0 905 984
- EP-A- 0 914 001
- WO-A-01/20899
- WO-A-93/07715
- FR-A- 2 758 430
- ADAMS M DULCHINOS D: "Open cable - The emergence of integrated broadband networks" IEEE COMMUNICATIONS MAGAZINE, IEEE SERVICE CENTER, PISCATAWAY, US, June 2001 (2001-06), pages 98-105, XP002959918 ISSN: 0163-6804

## Description

### BACKGROUND OF THE INVENTION

The present invention relates to a digital set-top box and, more particularly, to a method of upgrading the firmware/software of a digital set-top box using a standardized point of deployment (POD) interface.

With the advent of digital broadcast systems, a broad array of interactive entertainment services are now provided by multiple cable operators. Exemplary interactive services include, interactive program guides, email and web access, interactive game shows, video games and the like. Yet these interactive services must be interfaced through a consumer set-top box (i.e., a cable television converter). Traditionally, each manufacture of cable television (CATV) equipment had its own proprietary set-top box. This hindered computation, however, as a consumer who wanted to switch cable companies often needed to purchase a new set-top box. The Telecommunications Act of 1996 was enacted to provide an open cable hardware platform to provide interoperability and portability between set-top boxes and cable systems.

The Telecommunications Act of 1996 empowered the Federal Communications Commission (F.C.C.) to create regulations that would enable consumers the ability to obtain set-top boxes and similar equipment from sources other than cable operators. Prior to the act, cable equipment (i.e., decoder boxes) was not interoperable across systems, in other words, cable operators carved out geographical markets based on proprietary systems which required specific hardware/software for reception. As television content increasingly migrated from RF transmission schemes to cable/satellite based systems, consumers became reliant on their local cable operator for delivering the signal/interactive services to their home.

To accomplish the objective of the act, a universal set-top box hardware and software platform has been developed by North American cable operators known as the OpenCable^{®} standard. In order to facilitate the desired portability and interoperability (i.e., between cable head ends and set-top boxes), while maintaining the proprietary content of cable operators (i.e., encryption, security, pay programming) the OpenCable^{®} compliant set-top boxes include generic hardware and software that may be used to decode cable television signals and a Point of Deployment (POD) interface for communicating with a POD module.

Although the invention is described in terms of an OpenCable^{®} compliant set-top box, it is not limited to this standard. It may be practiced with any set-top box that is configured to accept a smart card that controls features of the set-top box including, without limitation, conditional access. In the materials that follow, the term open cable set-top box is used to refer to these devices generically.

The POD module includes hardware and software that customizes the set-top box to a particular CATV provider. As currently implemented, the POD interface to the set-top box is a personal computer memory card international association (PCMCIA) port, Japan electronic industry development association (JEIDA) port or the like, hereafter "smart card port." A compatible POD module (i.e. a PCMCIA or JEIDA card) interfaces with the smart card port to provide proprietary services (i.e., conditional access functions) such as pay programming, entertainment guides, encryption, security and the like. For the typical bi-directional cable system, the POD module includes a CPU channel, an out-band channel and an in-band channel operably linked to the smart card port of the set-top box. The set-top box relies on the POD module only for specific proprietary services. Because it includes generic hardware and software as well as the smart card port, the OpenCable^{®} compliant set-top box is designed to be portable and interoperable across cable networks.

As firmware/software executables of these compliant set-top boxes are introduced for utilizing the standard, a method of upgrading, providing software patches, bug fixes and the like to the set-top box is necessary. Yet, the number of manufactures and anticipated set-top box models is too great to provide such upgrades over the cable systems even if cable operators were willing to dedicate the bandwidth. Moreover the size of the executables would be prohibitive for provision via a telephone interface, similarly, attention by an authorized service provider is cost prohibitive.

Accordingly, there is a need for a method of providing a code upgrade to an open cable complaint host device in a cost effective manner.
WO 93/07715 A discloses a method and apparatus for customizing a device with a smart card. The apparatus is a pay TV decoder containing a CPU, which is connected to a ROM, to an EEPROM memory, and to a car reader. Once the decoder has identified the installer smart card, it will store the data received from smart card inside memory.
EP 0 905 984 A discloses a system of downloading computer software with broadcasting program.
EP 0 914 001 A discloses a method and apparatus for downloading of applications in a digital decoder.
WO 01/20899 A discloses a removable card system with downloadable agent program for communicating with a digital television receiver or other host device.
FR 2 758 430 discloses a method and a system of downloading of numerical data by satellite.

### SUMMARY OF THE INVENTION

The invention is defined by the subject-matter of the independent claims. The dependent claims are directed to advantageous embodiments.

### ADVANTAGES OF THE INVENTION

Advantageously, it is provided a smart card which includes a software upgrade to a host device having a smart card interface. A memory in the smart card stores the software upgrade for delivery to the host device. The smart card includes a card information structure (CIS) in accordance with a standard protocol for identifying the smart card as a software upgrade card so that the host device can access the software upgrade.

Advantageously, it is further provided a method of providing a code upgrade to a host device having a smart card interface. A smart card is provided including a code upgrade for transfer to the host device. The smart card is interfaced with the smart card interface of the host device. The smart card is recognized as a code upgrade and data on the card is accessed for upgrading the software/firmware of the host device.

### BRIEF DESCRIPTION OF THE DRAWINGS

These and other features, aspects, and advantages of the present invention will become more fully apparent from the following description, appended claims, and accompanying drawings in which:

Fig. 1 is a block diagram of an open cable compliant host device having a POD interface and upgrade card in accordance with an exemplary embodiment of the invention;

Fig. 2 is a block diagram of the software interface provided for a smart card port of an exemplary host device in accordance with the present invention; and

Fig. 3 is a flow chart illustrating a method of upgrading code of the compliant host device in accordance with an exemplary embodiment of the present invention.

### DESCRIPTION OF THE EXEMPLARY EMBODIMENT

Certain terminology used in the following description is for convenience only and is not limiting. The term "smart card" refers to portable circuit cards such as type I - III personal computer memory card international association (PCMCIA) cards, Japan electronic industry development association (JEIDA) cards and like cards configured to operate in accordance with the standardized mechanical and electrical specifications for use with open cable compliant host devices. The term "compliant host device" is defined as corresponding to the set-top box standard outlined in OpenCable® HOST-POD INTERFACE SPECIFICATION of Cable Television Laboratories Inc. the entirety of which is hereby incorporated by reference. The terms "code", "computer code" and "software" are used interchangeably. The term "tuple" is used to denote a data object having two or more components. In the drawings, the same reference numerals are used for designating the same elements throughout the several figures. While the invention is described in terms of an open cable compliant set-top-box, it is generally applicable to any set-top-box having a smart card interface.

The present invention is embodied in a smart card and smart card interface for providing a code upgrade to an open cable compliant host device. A memory of the smart card stores the code upgrade for delivery to the host device. The smart card having the code upgrade includes a card information structure (CIS) for identifying the smart card as a code upgrade card so that the complaint host device can access the code upgrade of the PCMCIA card to upgrade the software/firmware of the compliant host device.

The present invention is also embodied in a method of providing a cost effective code upgrade to an open cable complaint host device. The smart card storing the code upgrade is lightweight, small in dimension and relatively inexpensive to produce. Thus, the smart card in accordance with the present invention can be readily supplied to an operator via normal business distribution channels such as mail services for correcting software errors in, or for upgrading an open cable complaint host device.

I. Conventional System Components

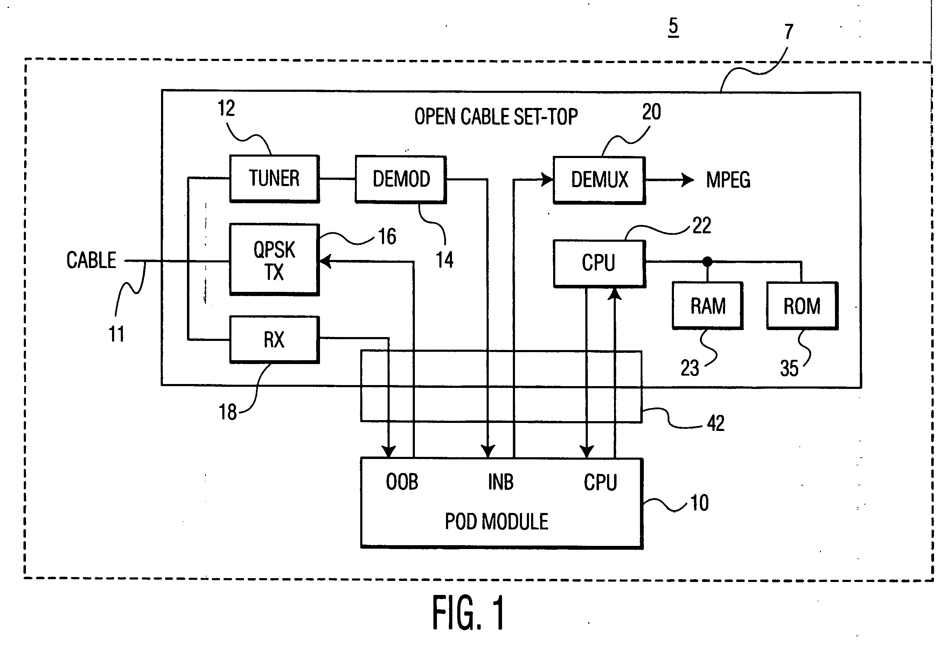

Referring now to the drawings, Fig. 1 is a high level block diagram showing a typical open cable compliant system 5. The system 5 is shown in a typical configuration, having an open cable compliant host device 7 operably linked to a point of deployment (POD) device 10 via a POD interface 42 and a subscriber line 11 linked to a cable television (CATV) head end. The POD 10 is provided to each subscriber of a proprietary cable system. The POD 10 enables the isolation of cable operator hardware/software specifics from the host device 7 (i.e., set-top box). In this way, the POD 10 and host device 7 split signaling functions such that RF and QPSK processing are performed by the host device 10 and decryption, descrambling and any signal processing specific to the CATV provider is performed under control of the POD 10. The POD 10 also provides an interface for communications between the subscriber and the CATV head end.

While the exemplary embodiment is described with reference to a bi-directional (i.e., two-way) land line cable system, those skilled in the art will recognize that other types of cable systems, including wireless systems are operable under the open cable standard. Similarly, one-way systems, and data over cable service interface specification (DOCSIS) systems are likewise compatible with the teachings of the present invention.

In the exemplary system, the host device 7 includes tuner 12, demodulator 14, quadrature phase shift keying (QPSK) transmitter 16, receiver 18, data processor 22 de-multiplexer 20, POD interface 42, random access memory (RAM) 23 and optional read only memory (ROM) 35. Both of the memories 23 and 35 are coupled to the data processor 22. The random access memory may be, for example, a battery backed dynamic RAM or other nonvolatile memory. As described below, the optional ROM 35 may hold a bootstrap loader and safe versions of the operational software. The exemplary processor 22 may run the software directly from the ROM 35 or download it to the RAM 23 if an error is detected in the current operating software stored in the RAM 23.

In operation, the transmitter 16 and receiver 18 of the host device 7 are used to transfer data between the set-top box and the CATV head-end via the cable or subscriber line 11. The tuner 12 of the host device 7 is provided for tuning to a desired channel frequency for receiving A/V content from the subscriber line 11. The demodulator 14 of the exemplary system 5 is a quadrature amplitude modulation QAM demodulator. The demodulated content is provided to the POD 10 for granting access to the subscriber.

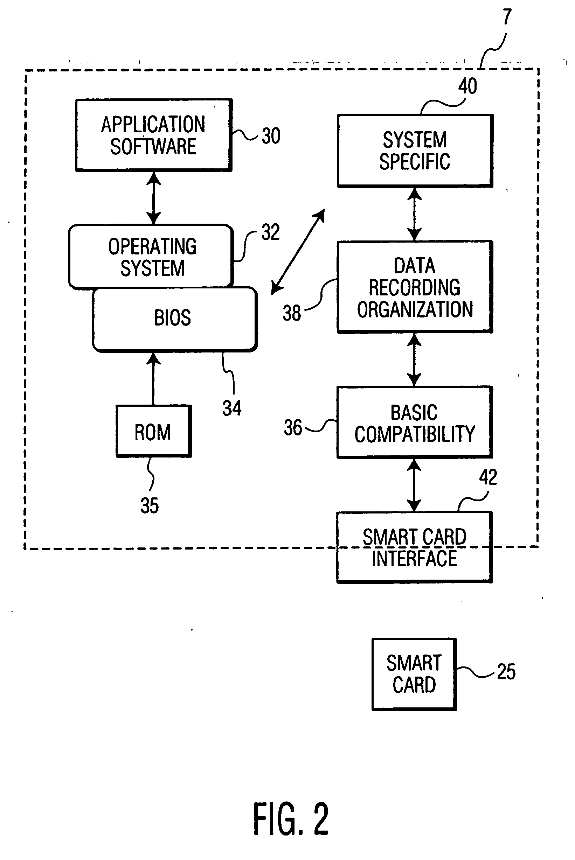

The POD interface 42 is a 68 pin smart card slot for receiving a POD 10 or smart card 25 (as shown in Fig. 2). The POD interface may operate in 16-bit or 32 bit mode as necessary.

The POD device 10, in accordance with an instruction set and subscriber permission parameters, conditionally grants/denies access to content provided via the subscriber line. Where the subscriber is granted access, POD 10 may provide a conditional access key, or "descrambling means" via the CPU channel to data processor 22 for presenting the content to the viewer via host device 7.

For example, the CATV signal may include a channel that carries an encrypted digital television signal. This television signal may be encoded, for example, according to the moving pictures experts group (MPEG) standard and encrypted using a symmetric algorithm such as the triple data encryption standard (triple DES). In one example, the packetized elementary stream (PES) packets of the MPEG bit-stream may be encrypted and then packed into MPEG transport packets. The transport decoder of the set-top box may receive and demodulate the signal, recover the transport packets and reconstruct the encrypted PES packets. The data in these packets is then passed to the in-band channel of the POD module where it is decrypted and passed back to the transport decoder. The POD module may use a pre-stored decryption key that may be provided, for example, via the out-of-band channel through an earlier communication with the cable head-end in which the encrypted programming was ordered.

The de-multiplexer 20 of host device 7 "unpacks" data packets of the subscriber line. The de-multiplexer may, for example, separate the data from PES framing to recover an elementary bit-stream. Alternatively, if the transport packets are encrypted, the de-multiplexer 20 may recover the PES packets from the transport packets and provide either the PES packets or the elementary bit-stream to an MPEG decoder (not shown).

Of course, the subject invention is not limited to any encoding standard nor to a digital implementation. For example, the POD module may be used to signal an analog decoder that the subscriber has paid for the programming that is being received and thus enable the decoder to apply conventional analog descrambling techniques to the received analog video signals.

The exemplary POD 10 of Fig. 1 is configured to operate on a bi-directional cable network. The POD 10 includes an out-of-band channel designated OOB, an in-band channel designated INB and a processing channel designated CPU. As described above, the INB signal receives content from the cable head end, the OOB channel allows two-way data communication between the set-top box and the head-end.

The content received via the INB channel is provided via tuner 12 and demodulator 14 of the host device 7. Where portions of the content are subject to conditional access (e.g., scrambled or encrypted) the POD 10 may provide a decryption facility including a conditional access key, or authorization for descrambling to present the content to the viewer via host device 7.

The OOB channel of the exemplary system 5 is provided for transmitting content such as a subscriber request to the cable head end for receiving a corresponding service or reply via the subscriber line. The QPSK transmitter of host device 7 is provided for modulating a carrier signal transmitted through the OOB channel to output a data stream to the head-end via the subscriber line.

Upon connection of POD 10 or a smart card 25 (see Fig. 2) to POD interface 42 of host device 7, an initialization sequence in accordance with a standard protocol of smart card 25 is performed for enabling Plug and Play^{®} functionality. The initialization sequence reads a card information structure (CIS) or "Metaformat" of a smart card 25 to determine whether the card is a POD. The Metaformat is a hierarchy of protocol layers and set of device independent drivers for specifying data-recording formats and organization. By programming the data processor 22 of host device 7 to recognize a tuple of the basic compatibility or "physical layer" of the smart card protocol, the host device can recognize a smart card 25 as a software/firmware upgrade and operate accordingly.

II. Smart card Protocol Layers

Referring now more specifically to Fig. 2, a block diagram of the host device software/firmware and Metaformat structure of the exemplary embodiment is shown.

The host device 7 includes application software 30, operating system 32, basic input output system (BIOS) 34, compatibility layer or "physical" layer 36, data recording/organization layer or "card services" 38, system specific layer or "socket services" 40, and POD interface 42. The system BIOS 34 is preloaded to the host device 7 upon manufacture (i.e., firmware). The application software 30 includes programs and data stored in the memory 23 (shown In Fig. 1) of host device 7 such as channel mapping, processing procedures, instruction sets, on-screen display bitmaps and the like. In addition to the memory 23, the host device 7 may also include a read-only memory (ROM) 35 which holds a copy of the operating system and BIOS as provided by the manufacturer. As a part of an error recovery procedure, following, for example, an unsuccessful software upgrade attempt, the host device 7 may reload the base software from the ROM 35.

The exemplary host device 7 employs BIOS 34 for communicating with peripheral devices in association with an operating system 32. As known to those in the art, the operating system 32 allocates the use of hardware resources of host device 7 for use in operation and or communication between hardware components. In the exemplary embodiment, the software upgrade may change the operating system 32, the BIOS 34 or both.

The Metaformat of the POD interface 42 is illustrated by compatibility layer 36, data recording/organization layer 38 and system specific layer 40. In accordance with the Metaformat, the smart card 25 can perform a plurality of memory and I/O operations such as providing data to the host device 7, providing additional memory capacity, and providing fax/modem capabilities, etc. The Metaformat is a standard protocol to integrate the smart card 25 into the host device 7 via POD interface 42.

System specific layer 40 of the Metaformat is the software interface to the POD interface 42 for managing all POD interfaces 42 and associated registers of a system 5. System specific layer 40 may be included in the host device 7 as a device driver and/or as a function of BIOS 34.

Data recording/organization layer 38 is an application programming interface (API) for enabling multiple applications 30 to communicate with smart card 25.

The compatibility layer or "physical layer" 36 specifies a minimum level of card data organization. Data at the card device driver layer include supported configurations, manufacturer, and individual device characteristics, etc.

In accordance with the OpenCable^{®} specification, the CIS of the basic compatibility layer 40 enables the interconnection of a POD 10 for use with a compliant host device 7. Upon connecting the POD 10 or smart card 25 to the host device 7, the host device 7 reads the CIS to identify the smart card 25 or POD 10. The host device 7 may also identify the POD 10 with a specific application, for example, a conditional access protocol such as EIA-697-B (National Renewable Security Standard). In the smart card memory mode, the host 7 accesses attribute memory of the POD 10 to read the CIS. Because the POD 10 is a custom smart card interface, the CIS includes a custom interface subtuple (CCST_CIF) field to provide the interface ID number (STCI_IFN) and a minimum set of tuples as defined by the smart card standard as outlined in SCTE-DVS131r7 (Point-of-Deployment Module Interface Proposal).

The CIS is readable whenever the POD 10 is powered and the POD 10 is reset. The CIS includes a minimum set of tuples as outlined in the OpenCable^{®} specification.

If the CIS does not include a recognized POD designation, the host device 7 produces an error message. Thus, the host device 7 employs an identified POD 10 in accordance with a predetermined instruction set of the data processor 22.

In accordance with the present invention, the smart card 25 includes a CIS tuple which designates the smart card 25 as a software upgrade in accordance with an instruction set of the data processor 22 of host device 7. In use, the POD 10 is disconnected from the host device 7 and the smart card 25 is connected to the POD interface 42. Once identified as a software upgrade, the smart card 25 provides software code to the CPU channel for storage in a memory (not shown) of host device 7. The code provided by smart card 25 may be for upgrading firmware/software of host device 7. In an alternative embodiment, the smart card 25 is identified at the application layer as described below.

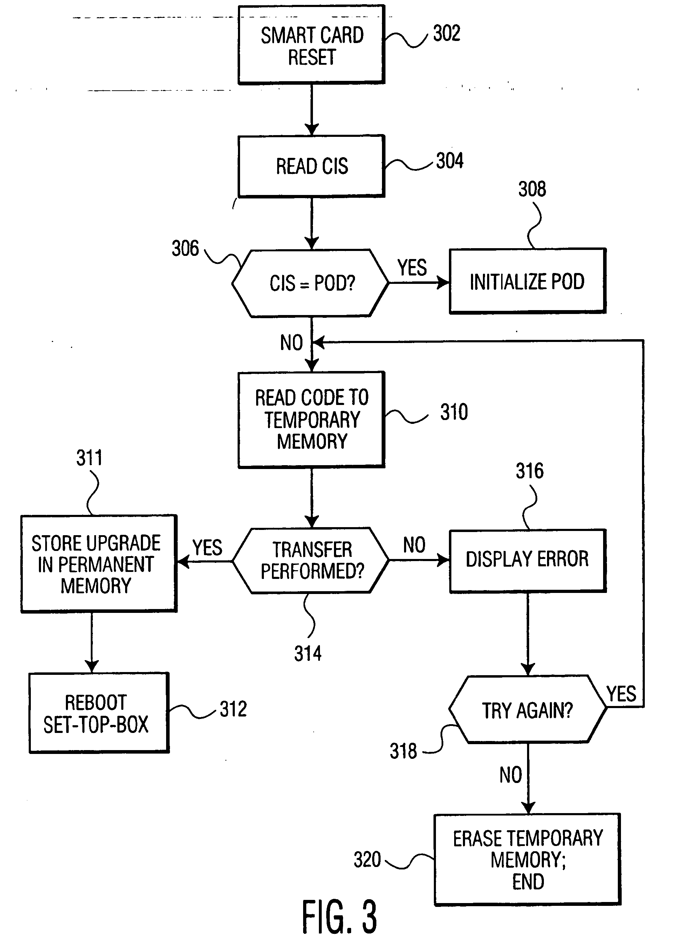

III. Referring now more specifically to Fig. 3, a flow chart illustrating a method of upgrading code of the compliant host device 7 in accordance with an exemplary embodiment of the present invention is shown.

At step 302, the POD interface is reset in accordance with the standard protocol upon insertion of a smart card 25. The CIS of the smart card 25 is read at step 304 by the data processor 22 of the host device 7. In an alternative embodiment, the identification is available in the application layer. At step 306, the data processor 22 determines whether the smart card is a POD 10. If the smart card is a POD 10, at step 308 the POD 10 is initialized. If the smart card 25 is recognized as a software upgrade, the process proceeds to step 310, otherwise an error message is produced by host device 7. At step 310 the new software is read from the memory of smart card 25. At step 314, the data processor 22 monitors the transfer until completion. Where the transfer cannot be completed an error is displayed at step 316 and, at step 318, the process determines whether the software update should be attempted again. If the update is to be attempted again, control transfers to step 310, described above. If the update is not to be attempted again then, at step 320, the temporary memory is cleared and the process ends. If, at step 314, the process determines that the transfer was performed correctly, at step 311, the code from the smart card is copied to permanent memory overwriting the operational software and, at step 312, the host device is rebooted.

The subject invention may perform several steps to ensure that the software upgrade is proper for the particular set-top-box and that the upgrade is properly copied before the host device is rebooted to use the upgraded software. First, upon detecting that the smart card 25 contains a software upgrade, the host device 7 may compare data contained in the card 25 to ensure that the upgrade is compatible with the host device. This may include, for example, comparing manufacturer and model number data as well as comparing for compatibility with the current operating system 32 and BIOS 34 (shown in Fig. 2).

If the system determines that the upgrade is compatible, it transfers control to a bootstrap loader that performs the actual transfer. The bootstrap loader may, for example, calculate a checksum or cyclic redundancy code (CRC) as it loads the new operating software and compare the calculated value with a corresponding value contained in the smart card 25 upon completion of the process. If the two values do not match, the operator may be prompted by a message displayed on the display device or on a LCD screen of the host device 7 to retry the software upgrade or to return to the original software, which the bootstrap loader loads from the ROM 35, shown in Fig. 2. If the checksum or CRC values do match, the software upgrade is permanently written into the memory 23. Upon successful completion of the update, the bootstrap loader, or the updated software may send a message to the head end via the OOB channel indicating that the software has been upgraded. This may be desirable, for example, to inform the head-end of new features that are enabled by the software upgrade. The bootstrap loader or base software from the ROM 35 may also indicate an unsuccessful upgrade by sending a message to the head end via the OOB channel.

Alternatively, as described above, the upgraded software code may be provided as a part of an applications program contained in the smart card 25. In this alternative embodiment of the invention, the software upgrade may be provided by the smart card 25 or the POD module 10. When provided via the POD module, the upgraded software may be included, for example, in applications data compliant with the national renewable security standard (NRSS). Details on NRSS may be found, for example, in a publication entitled "Conditional Access System for Terrestrial Broadcast" Doc. A/70 published by the Advanced Television Systems Committee (www.atsc.org). If this upgrade method is used, the current operational software running on the host system 7 may check the version and hardware compatibility of the new software, copy the new operational software to an area of memory, perform a checksum or CRC to ensure that the software is properly copied and then invoke the bootstrap loader to overwrite the current operational software in the memory 23.

It will be understood that various changes in the details, materials, and arrangements of the parts which have been described and illustrated above in order to explain the nature of this invention may be made by those skilled in the art without departing from the principle and scope of the invention as recited in the following claims.

## Claims

1. A method of upgrading operational software in a host device (7) having a smart card interface (42), wherein the host device (7) is a set top box configured to accept a smart card (25) that controls features of the set top box, comprising the steps of:
a) providing the smart card (25) including data representing upgraded firmware for the host device (7);
b) interfacing the smart card (25) with the smart card interface (42) of the host device (7),
c) recognizing, in the host device (7), the smart card (25) as including the upgraded firmware;
d) determining compatibility of the upgraded firmware with the host device (7) by comparing attributes of the upgraded firmware to that of the host device (7), wherein the host device (7) performs the determination of the compatibility before the upgraded firmware is transferred from the smart card (25) to the host device (7); and
e) if the upgraded firmware is determined to be compatible, transferring the upgraded firmware from the smart card (25) to a memory (23) of the host device (7) to perform the code upgrade.

2. The method according to claim 1, wherein the step of recognizing the smart card (25) as including the upgraded firmware includes the steps of:
accessing a card information structure (CIS) of the smart card (25); and
comparing the CIS to predetermined parameters which identify the smart card (25) as a firmware upgrade smart card.

3. The method according to claim 1, wherein the smart card (25) includes (National Renewable Security Standard) NRSS conditional access protocols and the step of recognizing the smart card (25) as including the upgraded firmware includes accessing application information specified by the NRSS.

4. The method according to claim 1, further wherein the host device (7) is an open cable compliant set top box, coupled to a cable head end and includes an out of band channel for transferring data between the host compliant device (7) and the cable head end and the method further includes the step of
sending a message to the cable head end via the out of band channel to indicate that the upgraded firmware has been transferred to the host compliant device (7).

5. The method as claimed in anyone of the claims 1 to 4, further comprising the step of:
resetting the host device (7) or the smart card interface after step b).

6. The method according to claim 1, wherein the host device is coupled to a cable television (CATV) head end, further comprising the steps of:
determining whether the firmware upgrade was successful; and
sending a message to the CATV head end when the firmware upgrade is complete.

7. Use of a smart card (25) for providing a code upgrade to an host device (7), in a method according to anyone of the claims 1 to 6, the smart card comprises a memory for holding upgraded firmware for delivery to the host device (7), the memory including a card information structure (CIS) for identifying the smart card (25) as a code upgrade card and data for determining compatibility of the upgraded firmware with the host device (7) by comparing attributes of the upgraded firmware to that of the host device (7).

8. Use of the smart card (25) according to claim 7, wherein the memory is a flash memory.

9. Use of the smart card (25) according to claim 8, wherein the smart card (25) conforms to standards adopted by one of the personal computer memory card international association (PCMCIA) and the Japan electronic industry development association (JEIDA).

10. Use of the smart card (25) according to claim 7, further including identification data which identifies a host compliant device (7) for which the upgraded firmware is intended.

11. An open cable compliant set top box (7) comprising:
a point of deployment (POD) interface (42);
smart card (25), coupled to the POD interface (42);
a processor (22), coupled to the POD interface (42);
a memory (23, 35), coupled to the processor (22), the memory (23, 35) including:
operational software that controls the set top box (7); and
a bootstrap loader which is configured to control the processor (22) to transfer program data from the POD interface (42) to the memory (23, 35) to overwrite the operational software, i.e. to overwrite firmware with upgraded firmware; and determining means (22) which determines whether the upgrade firmware is compatible by comparing attributes of the upgraded firmware to that of the host device (7), wherein the set top box (7) determines the compatibility before the upgrade firmware is transferred from the POD interface (42) to the memory (23, 35).

12. The open cable compliant set top box (7) according to claim 11, wherein the smart card (25) includes a card information structure (CIS) data which identifies the smart card (25) as a POD card or a software update card and the memory (23, 35) includes further software, configured to control the processor to read the CIS data.

13. The open cable compliant set top box (7) according to claim 12, wherein the smart card (25) conforms to standards adopted by one of the personal computer memory card international association (PCMCIA) and the Japan electronic industry development association (JEIDA).

14. The open cable compliant set top box (7) according to claim 13, wherein:
the smart card (25) further includes identification data which identifies a host compliant device (7) for which the upgraded firmware is intended; and
the memory (23, 35) further includes software that causes the processor (22) to read the identification data from the smart card (25) and to compare the identification data to identification data for the set top box (7);
whereby the processor (22) determines if the firmware update is appropriate for the set-top box (7).

## Patentansprüche

1. Verfahren zum Upgraden von Betriebssoftware in einer Host-Vorrichtung (7), die eine Smartcard-Schnittstelle (42) besitzt, wobei die Host-Vorrichtung (7) eine Settop-Box ist, die konfiguriert ist, um eine Smartcard (25) aufzunehmen, die Eigenschaften der Settop-Box steuert, wobei das Verfahren die folgenden Schritte umfasst:
a) Vorsehen der Smartcard (25), die Daten enthält, die Upgrade-Firmware für die Host-Vorrichtung (7) repräsentieren;
b) Verbinden der Smartcard (25) mit der Smartcard-Schnittstelle (42) der Host-Vorrichtung (7),
c) Erkennen in der Host-Vorrichtung (7), dass die Smartcard (25) die Upgrade-Firmware enthält;
d) Bestimmen einer Kompatibilität der Upgrade-Firmware mit der Host-Vorrichtung (7) durch Vergleichen von Attributen der Upgrade-Firmware mit jenen der Host-Vorrichtung (7), wobei die Host-Vorrichtung (7) die Bestimmung der Kompatibilität ausführt, bevor die Upgrade-Firmware von der Smartcard (25) an die Host-Vorrichtung (7) übertragen wird; und
e) falls bestimmt wird, dass die Upgrade-Firmware kompatibel ist, Übertragen der Upgrade-Firmware von der Smartcard (25) an einen Speicher (23) der Host-Vorrichtung (7), um das Upgrade des Codes auszuführen.

2. Verfahren nach Anspruch 1, wobei der Schritt des Erkennens, dass die Smartcard (25) die Upgrade-Firmware enthält, die folgenden Schritte umfasst:
Zugreifen auf eine Karteninformationsstruktur (CIS) der Smartcard (25); und
Vergleichen der CIS mit vorgegebenen Parametern, die die Smartcard (25) als Firmware-Upgrade-Smartcard identifizieren.

3. Verfahren nach Anspruch 1, wobei die Smartcard (25) NRSS-Protokolle für bedingten Zugriff (NRSS: *National Renewable Security Standard*) enthält und der Schritt des Erkennens, dass die Smartcard (25) die Upgrade-Firmware enthält, das Zugreifen auf Anwendungsinformationen, die durch den NRSS spezifiziert werden, umfasst.

4. Verfahren nach Anspruch 1, wobei ferner die Host-Vorrichtung (7) eine offene kabelnormgerechte Settop-Box ist, die mit einem Kabelkopfende gekoppelt ist und einen Außerbandkanal für die Übertragung von Daten zwischen der hostnormgerechten Vorrichtung (7) und dem Kabelkopfende enthält und das Verfahren ferner den folgenden Schritt umfasst:
Senden einer Nachricht zu dem Kabelkopfende in dem Außerbandkanal, um anzuzeigen, dass die Upgrade-Firmware an die host-normgerechte Vorrichtung (7) übertragen worden ist.

5. Verfahren nach einem der Ansprüche 1 bis 4, das ferner den folgenden Schritt umfasst:
Zurücksetzen der Host-Vorrichtung (7) oder der Smartcard-Schnittstelle nach dem Schritt b).

6. Verfahren nach Anspruch 1, wobei die Host-Vorrichtung mit einem Kabelfernseh-Kopfende (CATV-Kopfende) gekoppelt ist, wobei das Verfahren ferner die folgenden Schritte umfasst:
Bestimmen, ob das Firmware-Upgrade erfolgreich war; und
Senden einer Nachricht an das CATV-Kopfende, wenn das Firmware-Upgrade abgeschlossen ist.

7. Verwendung einer Smartcard (25) für die Bereitstellung eines Code-Upgrades für eine Host-Vorrichtung (7) in einem Verfahren nach einem der Ansprüche 1 bis 6, wobei die Smartcard einen Speicher zum Halten von Upgrade-Firmware für die Lieferung an die Host-Vorrichtung (7) umfasst, wobei der Speicher eine Karteninformationsstruktur (CIS) zum Identifizieren der Smartcard (25) als eine Code-Upgrade-Karte sowie Daten zum Bestimmen der Kompatibilität der Upgrade-Firmware mit der Host-Vorrichtung (7) durch Vergleichen von Attributen der Upgrade-Firmware mit jenen der Host-Vorrichtung (7) enthält.

8. Verwendung der Smartcard (25) nach Anspruch 7, wobei der Speicher ein Flash-Speicher ist.

9. Verwendung der Smartcard (25) nach Anspruch 8, wobei die Smartcard (25) mit Standards konform ist, die von der Internationalen Vereinigung für Personalcomputer-Speicherkarten (PCMCIA) oder von der Japanischen Vereinigung zur Entwicklung der elektronischen Industrie (JEIDA) eingeführt worden sind.

10. Verwendung der Smartcard (25) nach Anspruch 7, die ferner Identifizierungsdaten enthält, die eine host-normgerechte Vorrichtung (7) identifizieren, für die die Upgrade-Firmware vorgesehen ist.

11. Offene kabelnormgerechte Settop-Box (7), die umfasst:
eine Aufstellpunkt-Schnittstelle (POD-Schnittstelle) (42);
eine Smartcard (25), die mit der POD-Schnittstelle (42) gekoppelt ist;
einen Prozessor (22), der mit der POD-Schnittstelle (42) gekoppelt ist;
einen Speicher (23, 35), der mit dem Prozessor (22) gekoppelt ist, wobei der Speicher (23, 35) enthält:
Betriebssoftware, die die Settop-Box (7) steuert; und
einen Bootstrap-Lader, der konfiguriert ist, um den Prozessor (22) zu steuern, damit er Programmdaten von der POD-Schnittstelle (42) an den Speicher (23, 35) überträgt, um die Betriebssoftware zu überschreiben, d. h. um Firmware mit Upgrade-Firmware zu überschreiben; und Bestimmungsmittel (22), die bestimmen, ob die Upgrade-Firmware kompatibel ist, indem sie Attribute der Upgrade-Firmware mit jenen der Host-Vorrichtung (7) vergleichen, wobei die Settop-Box (7) die Kompatibilität bestimmt, bevor die Upgrade-Firmware von der POD-Schnittstelle (42) an den Speicher (23, 35) übertragen wird.

12. Offene kabelnormgerechte Settop-Box (7) nach Anspruch 11, wobei die Smartcard (25) Karteninformationsstruktur-Daten (CIS-Daten), die die Smartcard (25) als eine POD-Karte oder als eine Softwareupdate-Karte identifizieren, enthält und der Speicher (23, 25) weitere Software enthält, die konfiguriert ist, um den Prozessor zu steuern, damit er die CIS-Daten liest.

13. Offene kabelnormgerechte Settop-Box (7) nach Anspruch 12, wobei die Smartcard (25) mit Standards konform ist, die von der Internationalen Vereinigung für Personalcomputer-Speicherkarten (PCMCIA) oder von der Japanischen Vereinigung zur Entwicklung der elektronischen Industrie (JEIDA) eingeführt worden sind.

14. Offene kabelnormgerechte Settop-Box (7) nach Anspruch 13, wobei:
die Smartcard (25) ferner Identifizierungsdaten enthält, die eine host-normgerechte Vorrichtung (7) identifizieren, für die die Upgrade-Firmware bestimmt ist; und
der Speicher (23, 35) ferner Software enthält, die den Prozessor (22) dazu veranlasst, die Identifizierungsdaten von der Smartcard (25) zu lesen und die Identifizierungsdaten mit Identifizierungsdaten für die Settop-Box (7) zu vergleichen;
wobei der Prozessor (22) bestimmt, ob das Firmware-Update für die Settop-Box (7) geeignet ist.

## Revendications

1. Procédé destiné à mettre à niveau un logiciel de fonctionnement dans un dispositif hôte (7) comportant une interface de carte à puce (42), dans lequel le dispositif hôte (7) est un boîtier décodeur configuré pour accepter une carte à puce (25) qui commande des caractéristiques du boîtier décodeur, comprenant les étapes consistant à :
a) prévoir la carte à puce (25) comportant des données représentant un micrologiciel mis à niveau pour le dispositif hôte (7) ;
b) connecter la carte à puce (25) à l'interface de carte à puce (42) du dispositif hôte (7),
c) reconnaître, dans le dispositif hôte (7), la carte à puce (25) comme comportant le micrologiciel mis à niveau ;
d) déterminer la compatibilité du micrologiciel mis à niveau avec le dispositif hôte (7) en comparant des attributs du micrologiciel mis à niveau à ceux du dispositif hôte (7), dans lequel le dispositif hôte (7) détermine la compatibilité avant de transférer le micrologiciel mis à niveau de la carte à puce (25) vers le dispositif hôte (7) ; et
e) si l'on détermine que le micrologiciel mis à niveau est compatible, à transférer le micrologiciel mis à niveau de la carte à puce (25) vers une mémoire (23) du dispositif hôte (7) pour effectuer la mise à niveau du code.

2. Procédé selon la revendication 1, dans lequel l'étape consistant à reconnaître la carte à puce (25) comme comportant le micrologiciel mis à niveau comprend les étapes consistant à :
accéder à une structure d'informations de carte (CIS) de la carte à puce (25) ; et à
comparer la CIS à des paramètres prédéterminés qui identifient la carte à puce (25) comme étant une carte à puce de mise à niveau du micrologiciel.

3. Procédé selon la revendication 1, dans lequel la carte à puce (25) comprend des protocoles d'accès conditionnels NRSS (Norme nationale de sécurité renouvelable) et l'étape consistant à reconnaître la carte à puce (25) comme comportant le micrologiciel mis à niveau consiste à accéder à des informations d'application spécifiées par la NRSS.

4. Procédé selon la revendication 1, dans lequel, en outre, le dispositif hôte (7) est un boîtier décodeur conforme à OpenCable, couplé à une tête de réseau et comprend un canal hors bande destiné à transférer des données entre le dispositif conforme à l'hôte (7) et la tête de réseau, et le procédé comprend en outre l'étape consistant à
envoyer un message à la tête de réseau par l'intermédiaire du canal hors bande pour indiquer que le micrologiciel mis à niveau a été transféré vers le dispositif conforme à l'hôte (7).

5. Procédé selon l'une quelconque des revendications 1 à 4, comprenant en outre l'étape consistant à :
réinitialiser le dispositif hôte (7) ou l'interface de carte à puce après l'étape b).

6. Procédé selon la revendication 1, dans lequel le dispositif hôte est couplé à une tête de réseau de télévision par câble (CATV), comprenant en outre les étapes consistant à :
déterminer si la mise à niveau du micrologiciel a réussi ou non ; et à
envoyer un message à la tête de réseau CATV lorsque la mise à niveau du micrologiciel est terminée.

7. Utilisation d'une carte à puce (25) pour effectuer une mise à niveau du code sur un dispositif hôte (7), dans un procédé selon l'une quelconque des revendications 1 à 6, la carte à puce comprend une mémoire pour conserver un micrologiciel mis à niveau destiné à être acheminé vers le dispositif hôte (7), la mémoire comprenant une structure d'informations de carte (CIS) destinée à identifier la carte à puce (25) comme étant une carte de mise à niveau du code et des données destinées à déterminer la compatibilité du micrologiciel mis à niveau avec le dispositif hôte (7) en comparant des attributs du micrologiciel mis à niveau à ceux du dispositif hôte (7).

8. Utilisation de la carte à puce (25) selon la revendication 7, dans laquelle la mémoire est une mémoire flash.

9. Utilisation de la carte à puce (25) selon la revendication 8, dans laquelle la carte à puce (25) est conforme aux normes adoptées par une association parmi l'association internationale des cartes mémoire pour ordinateur personnel (PCMCIA) et l'association pour le développement de l'industrie électronique japonaise (JEIDA).

10. Utilisation de la carte à puce (25) selon la revendication 7, comprenant en outre des données d'identification qui identifient un dispositif conforme à l'hôte (7) auquel le micrologiciel mis à niveau est destiné.

11. Boîtier décodeur conforme à OpenCable (7) comprenant :
une interface (42) de point de déploiement (POD) ;
une carte à puce (25), couplée à l'interface POD (42) ;
un processeur (22), couplé à l'interface POD (42) ;
une mémoire (23, 35), couplée au processeur (22), la mémoire (23, 35) comprenant :
un logiciel de fonctionnement qui commande le boîtier décodeur (7) ; et
un programme d'amorce qui est configuré pour commander au processeur (22) de transférer des données de programme de l'interface POD (42) vers la mémoire (23, 35) afin d'écraser le logiciel de fonctionnement, c'est-à-dire afin d'écraser le micrologiciel avec un micrologiciel mis à niveau ; et un moyen de détermination (22) qui détermine si le micrologiciel mis à niveau est compatible en comparant des attributs du micrologiciel mis à niveau à ceux du dispositif hôte (7), dans lequel le boîtier décodeur (7) détermine la compatibilité avant de transférer le micrologiciel mis à niveau de l'interface POD (42) vers la mémoire (23, 35).

12. Boîtier décodeur conforme à OpenCable (7) selon la revendication 11, dans lequel la carte à puce (25) comprend des données de structure d'informations de carte (CIS) qui identifient la carte à puce (25) comme étant une carte POD ou une carte de mise à niveau du logiciel et la mémoire (23, 35) comprend un autre logiciel, configuré pour commander au processeur de lire les données CIS.

13. Boîtier décodeur conforme à OpenCable (7) selon la revendication 12, dans laquelle la carte à puce (25) est conforme aux normes adoptées par une association parmi l'association internationale des cartes mémoire pour ordinateur personnel (PCMCIA) et l'association pour le développement de l'industrie électronique japonaise (JEIDA).

14. Boîtier décodeur conforme à OpenCable (7) selon la revendication 13, dans lequel :
la carte à puce (25) comprend en outre des données d'identification qui identifient un dispositif conforme à l'hôte (7) auquel le micrologiciel mis à niveau est destiné ; et
la mémoire (23, 35) comprend un outre un logiciel qui entraîne le processeur (22) à lire les données d'identification de la carte à puce (25) et à comparer les données d'identification aux données d'identification pour le boîtier décodeur (7) ;
grâce à quoi le processeur (22) détermine si la mise à niveau du micrologiciel convient au boîtier décodeur (7).
